# EUROPEAN PATENT APPLICATION

(11) **EP 4 080 117 A1**
(43) Date of publication of application: **26.10.2022**
(21) Application number: 21170228.7
(22) Date of filing: 23.04.2021
(51) Int. Cl.: F23D 14/16, C09K 11/77, F21K 2/04, G02B 6/02

(54) **POROUS BURNER WITH VOLUMETRIC RADIATIVE COOLING**

(71) Applicant: Triangle Resource Holding AG, 6330 Cham (CH)
(72) Inventor: WEIDMAN, Urs A., 6330 Cham (CH); LOUIS, Thomas André, 8957 Spreitenbach (CH); KUNTE, Stephan, 6333 Hünenberg See (CH)
(74) Representative: Keller Schneider Patent- und Markenanwälte AG

(57) **Abstract**

A porous burner (10) comprises:
a) a combustion chamber (15) having porous structure, for combustion of a combustible gas and a gaseous oxidant, flowing through the combustion chamber (15) along a direction of gas flow (GF);
b) a porous flame barrier (14) being located upstream the combustion chamber (15);
c) a mixing chamber (13) being arranged upstream the flame barrier (14), which is configured for delivering the combustible gas and gaseous oxidant through the flame barrier (14) into the combustion chamber (15) and which can be used for preheating the porous burner (10) in an initial start-up process;
d) a thermal insulation (18) surrounding at least the combustion chamber (15);
e) a gas supply device (12) for supplying the combustible gas and/or the gaseous oxidant to the mixing chamber (13);
f) an exhaust gas outlet (16) for discharging combusted gas form the combustion chamber (15), especially at a side of the combustion chamber (15) opposite the flame barrier (14);
g) an array of light guiding fibres (17) arranged in the combustion chamber (15), whereby the light guiding fibres extend across the combustion chamber (15) and penetrate through the surrounding thermal insulation (18) in a direction different to the direction of gas flow (GF), especially perpendicular to the direction of gas flow (GF).

## Description

### Technical Field

The invention relates to a porous burner, a setup of porous burners and a method for operating a porous burner. Furthermore, the invention is directed to the use of a porous burner for generating electromagnetic radiation in the visible and/or near infrared spectrum.

### Background Art

Porous burners are specially designed gas burners. Specifically, in porous burners the combustion reaction of a premixed combustible gas and a gaseous oxidant takes place in a porous structure rather than in an open flame. Porous combustion, as compared to open flame combustion, results in faster, more efficient, more complete reaction of gases and operation at higher temperatures. Conventional porous burners achieve far higher power densities than open flame burners, but are more challenging to ramp-up and operate, particularly at very high temperatures. This is due ceramic materials used in porous burners being very sensitive to thermal shock induced material stress and cracking. Since reaction speed and power density in porous burners is high and more difficult to control, with dynamic local hotspot formation causing microscopic cracks and premature failure of entire devices, this is particularly problematic with conventional porous burners of larger dimensions.

In porous media, the chemical reaction between the premixed combustible gases and the gaseous oxidant, such as carbohydrates and air, depending on the properties of the gas and the porous media, can either be inhibited, in which case the porous media acts as a flame barrier, or be accelerated, in which case the porous media acts as a combustion chamber. Specifically, depending on the characteristics of the pores, such as shape, directionality, size (average distance between solid surfaces), density (pores per inch) and macroscopic porosity (% vol solid material), a porous material can be acting as a flame barrier or a porous burner - or both - depending on the chemical properties (energy content, composition) and physical properties (pressure, temperature, mass flow and velocity) of the premixed gases.

Porous burners are devices that typically feature three functionally distinct components:
- a premix or precombustion zone
- a flame barrier
- a combustion zone

The first zone along the gas flow path, the premix zone, is the volume into which one or more combustible gases are injected with a gaseous oxidant, typically air and/or oxygenated gases, and within which the gases are mixed. The premix zone is typically designed such as to maintain the temperature of the premixed gases, and of all surfaces in contact with the pre-mixed gases, well below the temperature at which spontaneous ignition occurs. The premix zone may be a bounded volume where gases mix by turbulence and/or diffusion, or a volume filled with particles, or a porous solid structure designed to enhance the mixing of different gases and achieve a homogenous mixture before the gas passes through the subsequent flame barrier into the combustion zone.

The second zone along the gas flow path, the flame barrier, is the volume which the premixed gas passes before entering the hot combustion zone. The flame barrier has several functions:
- thermal insulation between hot combustion and cold premix zone
- transmitting gas at a velocity above flame propagation speed
- acting as a heat exchanger between the solid walls and gas flow
- quenching of possible ignition spots

The gas flow and the design and material properties of the flame barrier must be such that the chemical reaction of premixed gas takes place only in the combustion zone, that the flame front does not enter the flame barrier and that the temperature in the flame barrier and the premix zone stays well below the spontaneous ignition temperature of the premix gas in the respective zones.

The third zone downstream along the gas flow path, the combustion zone, is the volume in which the premixed gases chemically react. Once the reaction is started, which can be triggered in various ways (pilot flame, electric spark, heated surface, etc.), the velocity at which the reaction takes place, hence the power density per volume (W/m³) and the resulting temperature achieved in the combustion zone of a porous burner can far exceed the respective values for combustion in an open flame. Very high temperatures and corresponding power densities of above 30 MW/m³ can be achieved in the volume of porous burners of only a few centimeters thickness. Consequently high surface emitted radiative power densities above 1'400 kW/m² can be realized.

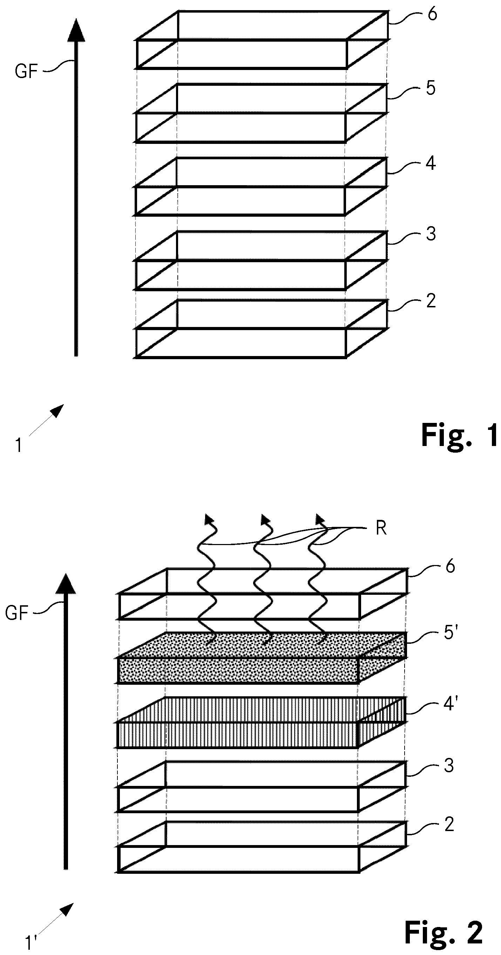

A schematic view of such devices is shown in Fig. 1 and 2.

Porous burners are advantageously used in applications requiring contactless, rapid thermal energy transfer from a source of thermal energy, the porous burner, acting as a combustion device and radiative emitter, to a material component that needs to be heated up fast, or maintained at elevated temperature, whereby its surface acts as the radiative absorber.

Porous burners have advantages over open combustion devices in terms of the power densities and temperatures that can be achieved. Porous burners require open porous cellular structures to be designed and manufactured from high temperature resistant materials that do not degrade in oxidizing atmospheres. Typically ceramics, mostly metal oxide ceramics, are the material of choice for use in high temperatures oxidizing atmospheres above 1'200°C characteristic of porous burners.

Porous burners have been designed with a variety of open porous cellular structures, based on the use of different ceramic materials, for operation at material surface temperatures ranging from 1'200°C to well above 1'500°C, for use as grey body radiative emitters, heaters, energy transfer devices in a range of technical applications.

The highest temperatures and power densities to date have been achieved with porous burners based on dense Al₂O₃ ceramic, respectively ceramic fibre matrix compound (CMC) materials with high Al₂O₃ content.

However, porous burners made of such materials typically are very sensitive to thermal shock during start-up and operation. Strong temperature gradients, whether static (K/mm) or dynamic (K/sec), cause dense Al₂O₃ material to crack, which limits the size of components that can be manufactured, the number and speed of thermal cycles a device can withstand without suffering fatal damage. These disadvantages limit the use and operational lifetime of porous burners, particularly in applications requiring frequent and rapid start-up and shutdown.

There is thus a need to develop new and improved porous burners which overcome the aforementioned drawbacks.

### Summary of the invention

It is the object of the invention to provide improved porous burners and improved methods for operating porous burners. In particular, the porous burner should be able to start up fast and to operate at very high temperatures while having an operational lifetime as long as possible. Especially, the porous burners should be suitable for applications requiring frequent and rapid start-up and shutdown cycles.

The solution of the invention is specified by the features of claim 1. According to the invention, a porous burner comprises:
a) a combustion chamber having porous structure, for combustion of a combustible gas and a gaseous oxidant, flowing through the combustion chamber along a direction of gas flow;
b) a porous or non-porous, thermally insulating flame barrier being located upstream the combustion chamber;
c) a mixing chamber being arranged upstream the flame barrier, which is configured for delivering the combustible gas and gaseous oxidant through the flame barrier into the combustion chamber and which can be used for preheating the porous burner in an initial start-up process;
d) a thermal insulation surrounding at least the combustion chamber;
e) a gas supply device for supplying the combustible gas and/or the gaseous oxidant to the mixing chamber;
f) an exhaust gas outlet for discharging combusted gas form the combustion chamber, especially at a side of the combustion chamber opposite the flame barrier;
g) an array of light guiding fibres arranged in the combustion chamber, whereby the light guiding fibres extend across the combustion chamber and penetrate through the surrounding thermal insulation in a direction different to the direction of gas flow, especially perpendicular to the direction of gas flow.

The inventive porous burner can be referred to as volumetric porous burner and in particular allows for using volumetric radiative cooling via the array of light guiding fibres for flame stabilization, and to collect and guide this radiation from the hot inside of the volumetric porous burner to the cold outside of the porous burner through the thermal insulation. Thereby, preferably, the thermal insulation covers the entire surface of the porous burner, except for the exhaust gas outlet and a gas inlet of the gas supply device.

According to the invention, a combustible gas premixed with a gaseous oxidant, e.g. air and/or oxygenated gas, at near ambient pressure can be converted into heat creating thermoluminescence inside the porous burner at high operating temperature. The extraction of radiation from the porous burner using an array of light-guiding fibres enables e.g. radiation in a wavelength range suitable for conversion in photovoltaic devices to be extracted in a more selective, more efficient manner from within the hot volume of the porous burner than can be achieved with designs for selectively emitting hot surfaces. This enables superior chemical to radiative energy conversion efficiency. In combination with photovoltaic (PV) devices, even standard crystalline silicon PV cells, overall chemical to electrical conversion efficiencies can thus be achieved that match or exceed the energy conversion efficiency of small combustion motor-generator devices, i.e. about 10%.

The array of light guiding fibres extending across the porous burner's combustion chamber and penetrating the thermal insulation covering the surfaces of the combustion zone are key to both volumetric porous combustion and to volumetric radiative cooling.

The array of light guiding fibres arranged in the combustion chamber of a volumetric porous burner has the following functional advantages over existing designs for volumetric porous burners:
- local hotspot elimination
- instant effective flame stabilization
- near lossless long-distance energy transport

Without being bound by theory, it is believed that the spontaneous formation of local hotspots in common volumetric porous burners is due to the increase in the speed of the chemical reaction between combustion gases in the combustion chamber with increasing temperature. The size of local hotspots and the temperature reached in excess of its immediate surroundings depend on the structure, the mechanical and thermal properties of the porous material respectively cellular structure of the porous burner. Effective heat dissipation from local hotspots into cooler surroundings is critical to flame stabilization in volumetric porous burners. Heat dissipation by radiative energy transfer is instant and dominant at high temperatures, compared to conductive heat transfer, through the solid lattice of the porous material, and compared to convective heat transfer, by the gases flowing through the open pores. Radiative energy transfer between a hot spot and a cooler environment is instant, at the speed of light, and irrespective of thermal mass. Radiative transfer through light guiding fibres is much more effective in terms of flame stabilization and prevention of local hot spots than any other form of energy transfer mechanism present in porous burners used to date. The instant dissipation of energy through volumetric radiative cooling using an array of light guiding fibres enables the use of highly thermally insulated volumetric porous burners with larger volumes, i.e. larger size in all dimensions, compared to existing radiant surface and volumetric porous burners.

Radiant surface burners operate by stabilizing a premixed flame near or partially inside a non-combustible porous burner support. The enthalpy of combustion released in the gas phase heats the porous matrix to a temperature at which thermal losses from radiation emitted, convective and conductive heat transfer then emits thermal radiation to a heat load. In small-scale applications radiant surface burners show performance gains over conventional open-flame burners in the form of higher efficiencies, lower NOx emissions, and more uniform heating.

The porous burner with volumetric radiative cooling described in this invention differs from the radiant surface burner inter alia by allowing mainly selectively filtered radiation of short wavelength inside the array of light guiding fibres to escape the porous burner's combustion zone. The properties of the light guiding fibres can be chosen such that radiative energy, at wavelengths for which the fibres are transparent, is transported instantly over extended distances, from centimetres to several meters, depending on fibre material composition and structure.

This enables the combustion chamber to be thermally well-insulated, on all surfaces. Energy released inside the combustion zone can thus be effectively retained inside the combustion zone. The convective heat transfer via the hot exhaust gases depends on the mass flow and temperature of the exhaust gases. The radiative energy transfer through the thermal insulation, at the cool outside surface of the insulation, via the array of closely spaced light guiding fibres, depends on the fibre temperature inside the combustion zone, the lower fibre temperature at the surface of the thermal insulation, the spectral transmission and absorption characteristics of the fibre over the entire length of the fibre.

With the burner operating in a steady state, the radiative energy leaving the porous burner through volumetric radiative cooling via the array of light guiding fibres, energy contained in the exhaust gases and heat losses through the outer surface of the thermal insulation equate to and are compensated by the enthalpy of the combustion gases supplied to the porous burner.

The operating temperature and surface radiative properties inside the combustion chamber determine the spectral distribution of radiation inside the light guiding fibres:
- Black body radiation increases with temperature by the power of 4
- Blackbody radiation peaks at shorter wavelengths as temperature increases
- The ratio of black body radiative energy below a given wavelength λ₀ to total blackbody radiative energy, particularly for a wavelength λ₀ shorter than the wavelength of peak spectral power density λₚₖ for the blackbody, increases dramatically with increasing temperature.

According to and from practical evidence, at typical operating temperatures for porous burner with volumetric radiative cooling of 1'200°C to 1'600°C, the radiative energy transfer through a fibre with suitable transmission and absorption properties increases dramatically with temperature:
- Radiative energy in the fibre doubles with an increase in temperature by 60 K
- Radiative energy in the wavelength spectrum below black body peak increases with temperature by the power of 10.

Radiation enters into the array of light guiding fibres from the surrounding combustion chamber. Radiation is also generated inside the fibre, guided inside the fibre along the fibre axis, where it is partly absorbed, then re-emitted, but mostly transferred towards the cold fibre ends. The total cross-section of fibre ends, for the array of light guiding fibres amounts to a fraction of the total surface area of the (thermal insulation of the) porous burner.

The size of the combustion chamber, the arrangement of light guiding fibres, their spacing and diameter, can be selected or adjusted depending on the intended use of the porous burner and/or the gas flow requirements.

Thus, thanks to the inventive setup, the formation of local hotspots inside the porous burner is significantly reduced due to volumetric radiative cooling. The strong temperature dependency of radiation generated inside the combustion chamber, captured, transferred, spectrally filtered and selectively emitted from the cold fibre ends, effectively dissipates excess heat, prevents the formation of local hotspots and leads to an even distribution of temperature across the porous burner volume or the combustion chamber, respectively. This enables the porous burner to be operated at high temperatures close to the limit imposed by the materials used without negatively affecting the operational lifetime. Furthermore, the inventive porous burners are suitable for applications requiring frequent and rapid start-up and shutdown cycles.

In particular, the porous structure of the combustion chamber has a porosity of 20 - 90%, especially 50 - 90% and/or whereby the porous structure of the combustion chamber has a pore density of 10 - 35 pores per inch (ppi). Thereby, porosity is meant to be macro-porosity with pores having an average diameter larger than 10 µm, especially larger than 100 µm. Likewise, pore density refers to pores having dimensions larger than 10 µm, especially larger than 100 µm. Put differently, microporosity or micropores having pores sizes smaller than the given values are not considered for the porosity of the porous structure of the combustion chamber.

Such porosities turned out to be ideal for the inventive porous burner. However, for special applications, other porosities might be suitable as well.

Especially, an average pore size and porosity of the porous structure of the combustion chamber is larger and gas flow is slower than in the flame barrier respectively. This allows for efficiently inhibiting combustion of the combustible gas and the gaseous oxidant in the flame barrier and effectively insulating the combustion chamber from the mixing chamber.

The light guiding fibres in the array preferably have an outer diameter of 10 - 1000 µm, especially 100 - 500 µm, and/or the light guiding fibres in the array preferably are spaced apart, especially regularly spaced apart, at 15 - 1'500 µm, especially 500 - 1'500 µm. With these dimensions, a highly effective radiative cooling and a stable large combustion zone across a large porous burner volume can be achieved. However, other dimensions are possible as well, e.g. for special applications.

Preferably, the light guiding fibres are essentially straight. Put differently, the light guiding fibres preferably are unbent and/or do not comprise any loops. Straight fibres allow for an efficient transmission over extended fibre length and coupling-out of the radiation at the fibre ends. Nevertheless, other fibre configurations, e.g. fibres with bends, might be suitable in special embodiments of the porous burner.

The light guiding fibres extend across at least 75%, in particular at least 90%, especially 100%, of the length of the combustion chamber in a direction different to the direction of gas flow, especially perpendicular to the direction of gas flow.

Especially, the light guiding fibres extend across at least 75%, in particular at least 90%, especially 100%, of the length of a cross-section of the combustion chamber in a plane perpendicular to the direction of gas flow.

Such arrangements allow for coupling-out the radiation from the combustion chamber in directions other than the direction of gas flow, e.g. at a free side area of the combustion chamber. With such a setup, the light guiding fibres can for example be spaced apart from the hot exhaust gas outlet.

In particular, the light guiding fibres penetrate through one, two or more outer surfaces of the surrounding thermal insulation, especially in parallel configuration. Hence, one or more outer surfaces of the porous burner preferably are configured for emitting electromagnetic radiation, especially in the visible and/or near infrared spectrum, from the inside of the combustion chamber through the ends of the light guiding fibres being present at the one, two or more outer surfaces of the surrounding thermal insulation.

Particularly, the total cross-section of fibre ends being present at the one, two or more outer surfaces of the surrounding thermal insulation, amounts to a substantial fraction of the total surface area of the thermal insulation of the porous burner.

Preferably, with respect to their longitudinal axes, all of the light guiding fibres are arranged in parallel, especially in a direction perpendicular to the direction of gas flow. With this configuration, the light guiding fibres can be closely packed and radiation leaving the combustion chamber though the fibres or their ends, respectively, can be collected for further use in common planes.

According to another preferred embodiment, a first part, especially 40 - 60%, of the light guiding fibres is arranged in a first direction and a second part, especially 40 - 60%, of the light guiding fibres is arranged in a second direction, which is different from the first direction, especially perpendicular to the first direction, and both, the first and the second directions are perpendicular to the direction of gas flow. Such a setup allows for collecting the radiation in different planes, especially in perpendicular planes.

In particular, the porous structure of the combustion chamber is made of a ceramic material and/or a ceramic matrix composite material, especially the ceramic material is selected from aluminium oxide (Al₂O₃) and/or a ceramic matrix composite material comprising aluminium oxide.

According to a special embodiment, the ceramic matrix composite material comprises aluminium oxide fibres forming a microporous thermally insulating material.

In a preferred embodiment, the porous structure of the combustion chamber comprises a stack of spaced apart and perforated plates. Thereby, the stack is preferably configured such that the perforations of the individual perforated plates are arranged in an overlapping manner and the fibres of the array of light guiding fibres run through the perforations of the perforated plates. In this embodiment, the porous structure is formed by the light guiding fibres and the perforated plates. The stack allows for keeping the array of light guiding fibres in a defined and fixed position within the combustion chamber.

The perforated plates can be made for example of a ceramic material and/or a ceramic matrix composite material, e.g. a polycrystalline ceramic wool (PCW), in particular made of individual pieces of connected aluminium oxide fibres of several *µ*m length.

In a special embodiment, the perforated plates, in areas outside the perforations, do not have any macro-porosity, i.e. pores having an average diameter larger than 10 µm, especially larger than 100 µm. However, in another embodiment, the perforated plates, in areas outside the perforations, can have macro-porosity.

In another highly preferred embodiment, the porous structure of the combustion chamber comprises a plurality of openings, especially cylindrical and/or prismatic openings, which extend through a porous and space filling body of the combustion chamber and in which openings of the body the light guiding fibres are arranged, especially such that the light guiding fibres form an integral part of the porous structure of the combustion chamber.

Thereby, preferably, the light guiding fibres, with respect to directions different from the longitudinal directions, are held in a form locking manner in the porous body.

Such a setup allows for a very efficient radiation cooling and temperature equalization in the combustion chamber.

Especially, the porous body is composed of a plurality of interconnected individual sub-units. This allows for scaling the combustion chamber in a very flexible manner. If for example, a porous burner with a higher power output is required, the size of the combustion chamber can easily be increased, either by extending the chamber's size, particularly in X-and/or Z-direction, i.e. in the plane perpendicular to the Y-direction of gas flow through the chamber, or by stacking multiple pairs of basic units of standardized size and orientation in X, Z and Y-direction.

The porous body of the combustion chamber can be designed as a single piece unit or as a stack of multiple sub-units. The optimum size of the combustion chamber for a standardized porous burner unit of desired output power can thus be designed independently of what is found to be the optimum size of easily manufacturable building blocks, i.e. ceramic elements combined in such a way as to constitute the porous combustion chamber with radiative cooling.

According to a further preferred embodiment, the porous structure of the combustion chamber is formed by a three-dimensional network of the light guiding fibres in interconnected state. Thereby, voids between the interconnected light guiding fibres form the pores of the combustion chamber. Thus, in this case, there is no need for a separate rigid porous body, for fixing the light guiding fibres, as described in the above embodiment.

For example, the porous structure is formed by the light guiding fibres in an interwoven arrangement, especially by a stack of at least two two-dimensional layers of light guiding fibres, whereby in each of the layers light guiding fibres are present in an interwoven arrangement. However, other arrangements are possible as well.

Preferably, the light guiding fibres are designed for guiding visible (VIS) and/or near infrared radiation (NIR).

Especially, the fibres in the array of light guiding fibres can be structured and/or doped to display favourable light guiding properties such as
- high transmission at shorter wavelengths (VIS and NIR)
- high absorption at longer wavelengths (FIR)
- steep, step-like transition between the two, at a specific wavelength
- high refractive index zones surrounded by
- low refractive index zones

This will ensure that radiation, particularly radiation in the short wavelength range propagating at angles well below 90° along the fibre axis, is effectively trapped inside the light guiding zone of the fibre by total internal reflection. This radiation is transmitted along the fibre axis towards the cold fibre end, where it leaves the fibre through the fibre end. Preferably the fibres used in the inventive porous burner with volumetric radiative cooling will be suitably composed, structured and doped such as to strongly absorb thermal radiation above a specific wavelength. Along the length of the fibre, from the hot combustion zone through the thermal insulation to the cold fibre end, the long wavelength radiation intensity will gradually decrease along the fibre as the fibre temperature decreases.

Since radiation at shorter wavelengths is more useful in many practical applications than radiation at longer wavelengths, at least from an energy conversion perspective, the ratio of radiative energy emitted at short wavelengths, below a certain cut-off wavelength, to the total radiative energy emitted, shall be referred to as the Figure of Merit (FoM).

The FoM of a single fibre or an array of fibres is the same. It is referred to as the Fibre Figure of Merit (FFoM) and depends only on the ratio of radiation emitted from the fibre end(s) below a certain wavelength to the total radiation emitted from the fibre end(s).

The FoM of the outer surface of the thermal insulation penetrated by the array of light guiding fibres depends mainly on the FFoM, and the spacing of fibres in the array, the spectrally selective emission of VIS/NIR radiation from the fibre ends and radiation from the outer surface of the thermal insulation surrounding the porous burner. This is referred to as the Surface Figure of Merit (SFoM). Since high temperature resistant thermal insulation materials used for porous burners are not transparent to radiation, rather emit radiation at long wavelengths corresponding to the surface temperature and emissivity of the insulating material, the SFoM and emitted radiation can be low, whereas the FFoM can be very high (FFoM between 0.5 and 1.0) and also the radiation emitted from the fibre ends, despite the fibre cross-sections accounting for only a fraction of the total surface of the porous burner, can be very high.

Finally, the FoM of the entire porous burner device, as defined by all surface areas showing a net flow of energy, from the device (inside) to the environment (outside), shall be defined as including not only radiation, but all forms of energy i.e.
- Radiation
- Conduction
- Convection

This is referred to as the Porous Burner Figure of Merit (PBFoM).

The light guiding fibres preferably are made of a material selected from Al₂O₃, SiO₂ or YAG (yttrium aluminium garnet). Such fibres can withstand high temperatures and are highly suitable for guiding light in the visible and the near infrared spectrum.

In terms of structure, the light guiding fibres can be fibres consisting of a homogeneous material. However, special fibre structures can be used to further improve the overall efficiency of the porous burner as explained in the following section.

In particular the light guiding fibres comprise a high refractive index zone surrounded by a low refractive index zone. Such structures help to guide the radiation along the longitudinal axis of the fibre towards the fibre end.

In a further preferred embodiment, at least a part of, especially all of, the light guiding fibres comprise two zones:
- at least one luminescence generating zone of a first material comprising a luminescence generating material for providing an emitted radiation predominantly at visible or near-infrared wavelength, and
- at least one wave guiding zone of a second material,
wherein the at least one wave guiding zone is configured to concentrate the emitted radiation predominantly within the at least one wave guiding zone.

Such fibres are particularly advantageous in terms of thermal energy conversion because the generating of radiation on one hand and the guiding and concentration of the radiation involve different or even contradicting functional requirements. For example, efficient generation of radiation aims for a high concentration of luminescence generating material, whereas guiding and concentration of the radiation aims for an undisturbed optical path by substantially avoiding radiation attenuation and/or radiation absorption.

In the context of the invention the term "zone" is understood as geometrically distinct locations, defined by the border between materials of different characteristics. A zone may consist of multiple distinct parts, including subzones or separated parts. The term "fibre" includes synonyms such as "waveguide" or "light guide". The term "luminescence generating zone", also called "optically active zone" or "active zone", refers to the zone that comprises luminescent material. The term "wave guiding zone", also called "optically passive zone" or "guiding zone" refers to the zone that transfers the emitted radiation towards one or both ends of the optical fibre. The concentration of radiation refers to processes that lead to an increased radiation density, in the sense of more photons per time interval penetrating an area A, in particular where area A is the cross section of the fibre at the fibre end, in particular predominantly at a near-infrared wavelength.

The improvement of the optical fibre as a source of radiation in an optical system is reflected in the fibre's ability to capture and guide the radiation originating from luminescence generated in one or more zones, in particular radiation generated by luminescent material embedded primarily near the large interface area between the luminescence generating zone and the wave guiding zone across the full length of the fibre. The length of the fibre, fibre temperature, spectral distribution and (preferably low) reabsorption determine the spectral power density per area of fibre cross section, typically expressed in [W/mm²]. In a limited spectral region, the power density from such improved optical fibre can exceed the power density from a black body of similar temperature, similar area, within a similar spectral range, resulting from a shift in the spectral distribution due to luminescent materials incorporated in specific zones of the fibre.

In an embodiment, the fibre comprises at least one hot zone and at least one cold zone. In particular, the at least one hot zone is located within a hot environment, further in particular inside of a hot cavity, and the cold zone is located outside of the hot environment, further in particular outside and/or remote of the hot cavity.

In an embodiment, the fibre is configured to concentrate the emitted radiation by shifting the spectral power distribution of the emitted radiation towards a shorter wavelength.

In a further embodiment, the at least one luminescence generating zone forms at least one inner part of the optical fibre, in a particular at least one core, and the wave guiding zone forms an outer part of the optical fibre, in particular a cladding, that surrounds the at least one luminescence generating zone. In one example, the inner part of the optical fibre and the wave guiding zone may form cylindrical bodies, which may or may not be arranged coaxially to each other.

In another embodiment, the at least one wave guiding zone forms an inner part of the optical fibre, in a particular at least one core, and the at least one luminescence generating zone forms an outer part of the optical fibre, in particular a cladding, that surrounds the at least one wave guiding zone.

In a further embodiment, the optical fibre comprises a peripheral zone comprising a third material, that surrounds both the wave guiding zone(s) and the luminescence generating zone(s), wherein the refractive index nₕ of the material of the peripheral zone is lower than the refractive indices of the first material and/or the second material.

In a further embodiment, the optical fibre according to any one of the preceding claims, wherein the at least one wave guiding zone is substantially transparent at a near-infrared wavelength and/or the emitted radiation is substantially non-interacting with the material of the wave guiding zone, in particular by substantially avoiding radiation attenuation and/or radiation absorption.

In a further embodiment, at least two of the materials of the optical fibre, in particular all materials, have substantially equal or similar viscosity at a fibre drawing temperature. In a further embodiment, the fibre drawing temperature is in a range of 1'800°C to 2'200°C, in particular 1'900°C to 2'100°C, further in particular 1'950°C to 2'050°C.

In a further embodiment, at least one of the materials of the optical fibre, in particular at least two of the materials, further in particular all materials, comprise a viscosity influencing material, which in particular modifies the viscosity. In a further embodiment, the concentration of the viscosity influencing material is at least 1 at%, in particular at least 10 at%, further in particular at least 20 at%.

In a further embodiment, at least one of the materials of the optical fibre, in particular at least two of the materials, further in particular all materials, comprise a refractive index influencing material, which in particular modifies the refractive index. In a further embodiment, the concentration of the refractive index material is at least 1 at%, in particular at least 10 at%, further in particular at least 20 at% not considering oxygen atoms (this omission of oxygen applies to the whole rest of this document).

In a further embodiment, the luminescence generating material comprises one or more rare earth materials of a group comprising elements with atomic numbers 21, 39 or 57-71, in particular optically active element category lanthanide with atomic numbers 57-71 and transition metals with atomic numbers 21, 39 or 57, in particular at least one element of the group comprising Ytterbium, Neodymium, Erbium and Yttrium.

In a further embodiment, the luminescence generating material comprises a concentration of at least 1 at%, in particular at least 4 at%, further in particular at least 10 at%. In a further embodiment, the luminescence generating material provides an emitting radiation predominantly in the near infrared range, in particular 800-1'500 nm, in particular 900-1'100 nm.

In a further embodiment, the first material and/or the second material comprises Si-oxide, in particular in form of silica, and/or Al-oxide, in particular in form of alumina.

In a further embodiment, the luminescence generating zone comprises a plurality of mutually separate luminescence generating zones arranged parallel to the fibre axis, in particular in form of strands of luminescent material, further in particular in form of discontinuous strands.

Such discontinuities in the luminescence generating zone have little impact on the fibre's wave guiding properties, i.e. the fibre's ability to concentrate and transfer radiation in the wave guiding zone. The fibre's resilience to such discontinuities in the luminescence generating zone enables the fibre to be composed, structured and drawn in ways that reduce manufacturing cost.

In a further embodiment, the wave guiding zone comprises a plurality of mutually separate wave guiding zones arranged parallel to the axis of the optical fibre.

In a further embodiment, the optical fibre has a diameter of more than 10 µm and supports multimode radiation propagation.

In a further embodiment, the optical fibre is configured to absorb the part of the emitted radiation that comprises a wavelength longer than a predetermined wavelength λ₀, in particular by reducing fibre transparency for wavelengths longer than the predetermined wavelength λ₀, whilst maintaining transmission for wavelengths shorter than said predetermined wavelength λ₀, further in particular by restricting a dopant concentration within the fibre.

According to a further preferred embodiment, the porous structure of the combustion chamber comprises a luminescence generating material, whereby, preferably, the luminescence generating material is homogeneously distributed in the porous structure and/or the luminescence generating material is located on an inner surface of the plurality of openings for receiving the light guiding fibres.

Especially, the luminescence generating material is placed on an inner surface of the combustion chamber and/or an inner surface of the combustion chamber is coated with the luminescence generating material.

In particular the luminescence generating material of the porous structure and/or on the inner surface of the combustion chamber is selected from the luminescence generating materials described above in connection with the special light guiding fibres. Thus, preferably, the luminescence generating material provides an emitting radiation predominantly in the near infrared range, in particular 800-1'500 nm, in particular 900-1'100 nm. Especially, it comprises one or more rare earth materials of a group comprising elements with atomic numbers 21, 39 or 57-71, in particular optically active element category lanthanide with atomic numbers: 57-71 and transition metals with atomic numbers 21, 39 or 57, in particular at least one element of the group comprising Ytterbium, Neodymium, Erbium and Yttrium.

In particular, the thermal insulation covers the entire surface of the porous burner, except for the exhaust gas outlet and the gas inlet of the gas supply device. Put differently, the porous burner preferably is fully encapsulated by the thermal insulation except for the exhaust gas outlet and the gas inlet of the gas supply device. Such a design ensures a best possible low-loss thermal insulation.

The thermal insulation preferably is made from a ceramic material, especially a ceramic composite material, e.g. a polycrystalline ceramic wool (PCW), in particular made of individual pieces of connected aluminium oxide fibres of several *µ*m length. However, other thermally insulating materials can be used as well.

In particular, the thermal insulation does not have any macro-porosity, i.e. pores having an average diameter larger than 10 µm, especially larger than 100 µm. However, the thermal insulation preferably is micro-porous.

Another aspect of the present invention is directed to a setup comprising at least a first porous burner as described above and a second porous burner as described above.

Especially, the at least two porous burners are arranged such that the exhaust gas outlet of the first porous burner is facing the exhaust gas outlet of the second porous burner. Especially, the at least first and second porous burners share a common exhaust gas outlet. Such a setup allows for stacking porous burners in the direction of gas flow.

In another preferred embodiment, the at least two porous burners are arranged such that the exhaust gas outlets of the at least two porous burners are arranged in a first common plane and the mixing chambers of the at least two porous burners are arranged in a second common plane which is spaced apart and plane-parallel to the first plane. Such a setup allows for stacking porous burners in a direction perpendicular to the direction of gas flow and perpendicular to the direction of the array of light guiding fibres.

Especially, the two possibilities of stacking can be combined. Thus, in this case, the setup preferably comprises (i) a first unit comprising a first and a second porous burner which are arranged such that the exhaust gas outlet of the first porous burner is facing the exhaust gas outlet of the second porous burner, and (ii) at least a second unit comprising a third and a fourth porous burner, which are arranged such that the exhaust gas outlet of the third porous burner is facing the exhaust gas outlet of the fourth porous burner, whereby (iii) the first and the second units are arranged such that the exhaust gas outlets of the first and the second units are located in a common plane. In this manner, the porous burners can be stacked in the direction of gas flow and at the same time perpendicular to the direction of gas flow.

Thanks to the special design of the inventive porous burners, the thermal insulation can effectively be maintained, thus thermal losses by conduction, convection and far infrared emission remain low. Thus, preferably, in all of the above described setups comprising more than one porous burner, the thermal insulation preferably fully encapsulates the complete setup of porous burners, except for the exhaust gas outlet and the gas inlet of the gas supply device.

A further aspect of the present invention is related to a method for operating a porous burner as described above or a setup of more than one porous burner as described above, whereby in operating state, a combustible gas and an oxidant are supplied along a direction of gas flow through the mixing chamber and the flame barrier for combustion in the combustion chamber.

Especially, for reaching the operating state, the method comprises the following steps:
(i) Supplying the combustible gas and the oxidant for combustion into the mixing chamber, whereby the mixing chamber is heated to a first temperature by combustion of the gases; and let the hot combusted gas flow through the flame barrier and the combustion chamber in order to heat up these components with the combusted gas;
(ii) After the combustion chamber has reached a predefined second temperature, especially a temperature above the self-ignition temperature of the combustible gas and the oxidant, stopping the combustion of the combustible gas in the mixing chamber, especially by stopping the supply of combustible gas; and let the mixing chamber cool down to a third temperature, which is lower than the second temperature, especially below the self-ignition temperature of the combustible gas and the oxidant;
(iii) Supplying the combustible gas and the oxidant through the mixing chamber and the flame barrier into the combustion chamber, such that the combustible gas and the oxidant spontaneously ignite upon contact with the hot porous structure of the combustion chamber.

Thus, thanks to this special method for reaching the operating state the combustion chamber can be heated up swiftly and homogeneously, in a very controlled manner, until reaching operating temperature. This reduces the risk of local hotspots formation in the start-up phase and enables the porous burner to reach high operational temperatures in a shorter time without negatively affecting the operational lifetime. Therefore, frequent and rapid start-up and shutdown cycles are much less problematic when following the specially developed method for reaching the operating state.

In particular, in step (i) the combustion is started with an ignition device, e.g. an electrically driven spark generator.

Especially, step (iii) is started while the temperature of the combustion chamber is above the self-ignition temperature of the combustible gas and the oxidant.

In particular, step (iii) is started when the upstream side of the flame barrier is cooler than the downstream side of the flame barrier, especially there is an increasing temperature gradient from the upstream side of the flame barrier to the downstream side of the flame barrier. This ensures that there will be no undesired self-ignition in the mixing chamber.

Most preferably, in step (iii) in a warm-up period, combustion of the combustible gas and the oxidant in the combustion chamber is limited to take place at the upstream side of the combustion chamber by setting a low gas flow, especially combustion takes place within the first 25% of the combustion chamber, with respect to the direction of gas flow; whereas after the warm-up period, the gas flow is increased to a higher level suitable for reaching a desired operational temperature. This helps to increase the temperature of the porous structure in the combustion chamber in a swift and controlled manner which in turn reduces the risk of thermal stress induced crack formation.

Especially, during combustion of the combustible gas and the oxidant in the combustion chamber, radiation is emitted from the porous burner via the light guiding fibres, especially in a direction different from the gas flow direction, especially in plane perpendicular to the direction of gas flow.

A still further aspect of the present invention is directed to the use of a porous burner as described above for generating electromagnetic radiation in the visible and/or near infrared spectrum.

Other advantageous embodiments and combinations of features come out from the detailed description below and the entirety of the claims.

### Brief description of the drawings

The drawings used to explain the embodiments show:
- Fig. 1: A schematic view of the setup of a prior art device for burning gaseous fuels;
- Fig. 2: A schematic view of a porous burner as known form prior art;
- Fig. 3: A comparison between the prior art porous burner of Fig. 2 (left side of Fig. 3) and an inventive porous burner with volumetric radiative cooling (right side of Fig. 3);
- Fig. 4: The energy balance of the inventive porous burner of Fig. 3 with volumetric radiative cooling;
- Fig. 5: A typical prior art start-up procedure conducted with the porous burner (left side of arrow) and an inventive method for reaching the operating state of the inventive porous burner shown in Fig. 3;
- Fig. 6a - f: The temperature profiles prevailing during the start-up procedure of the inventive porous burner shown in Fig. 3;
- Fig. 7a: A first possible design of a combustion chamber whereby the porous structure comprises stacked sub-units consisting of a cellular matrix structure with a plurality of openings, which extend through the cellular matrix, for the purpose of insertion and placement of light guiding fibres;
- Fig. 7b: Another possible design of a combustion chamber whereby the porous structure comprises a stack of spaced apart and perforated plates for receiving the light guiding fibres (not shown);
- Fig. 7c: A third possible design of a combustion chamber, whereby the porous structure is formed by a stack of two-dimensional layers of the light guiding fibres in an interwoven arrangement;
- Fig. 8: An overview of suitable porosities and pore densities of ceramic materials for porous burners;
- Fig. 9: The temperature gradient across the porous combustion chamber and the thermal insulation of the porous burner of Fig. 3 in the direction of radiative energy transport;
- Fig. 10: The figure of merit (%) of an inventive porous burner, i.e. the ratio of radiative energy emitted at short wavelengths, below a certain cut-off wavelength λ₀, to the total radiative energy emitted;
- Fig. 11: A detailed view of the design of the combustion chamber of Fig. 7b with perforated plates and additional thermal insulation elements facing the outer perforated plates;
- Fig. 12: The arrangement of Fig. 11 with an array of light guiding fibres arranged in the perforations of the plates and the holes of the thermal insulation elements;
- Fig. 13: A setup with two porous burners with anti-parallel gas flow directions and a common exhaust gas outlet;
- Fig. 14a: A combustion chamber with increased depth;
- Fig. 14b: A setup with several stacked combustion chambers;
- Fig. 15: A setup with two porous burners of Fig. 13 and four further insulating elements for surround the porous burner;
- Fig. 16: A schematic view of an optical fibre with a single high-refractive index waveguiding zone;
- Fig. 17: An optical fibre as in Fig.16 with an additional low-refractive index luminescence generating zone.

In the figures, the same components are given the same reference symbols.

### Preferred embodiments

Fig. 1 shows a schematic exploded view of the setup of a prior art device 1 for burning gaseous fuels. The device 1 comprises the following elements: a gas supply device 2 for supplying a combustible gas and a gaseous oxidant along the direction of gas flow GF through a mixing chamber 3 and a subsequent flame barrier 4 into the combustion chamber 5. Downstream the combustion chamber 5, there is an exhaust gas outlet 6 for discharging combusted gas form the combustion chamber 4. The vertically exploded view has been chosen for reasons of clarity. In reality, elements 2, 3, 4, 5, 6 are in physical contact.

Fig. 2 shows a schematic exploded view of a porous burner 1' as known form prior art. The porous burner 1' is based on the setup shown in Fig. 1. However, the flame barrier 4' as well as the combustion chamber 5' both have a porous structure, e.g. consisting of metal-oxide ceramics, such as Al₂O₃. As explained in the introductory part, such a design allows to achieve temperatures in the combustion chamber 5' that can far exceed the respective values for combustion in an open flame. Thus, very high temperatures and corresponding power densities of above 30 MW/m³ can be achieved.

Porous burners are normally operated in such a way as to maintain the flame front inside the porous media of the combustion chamber 5', close to the downstream surface of the combustion chamber 5' emitting radiation R. With such a setup, radiation R is emitted from the porous burner 1' in the direction of gas flow GF, as indicated in Fig. 2.

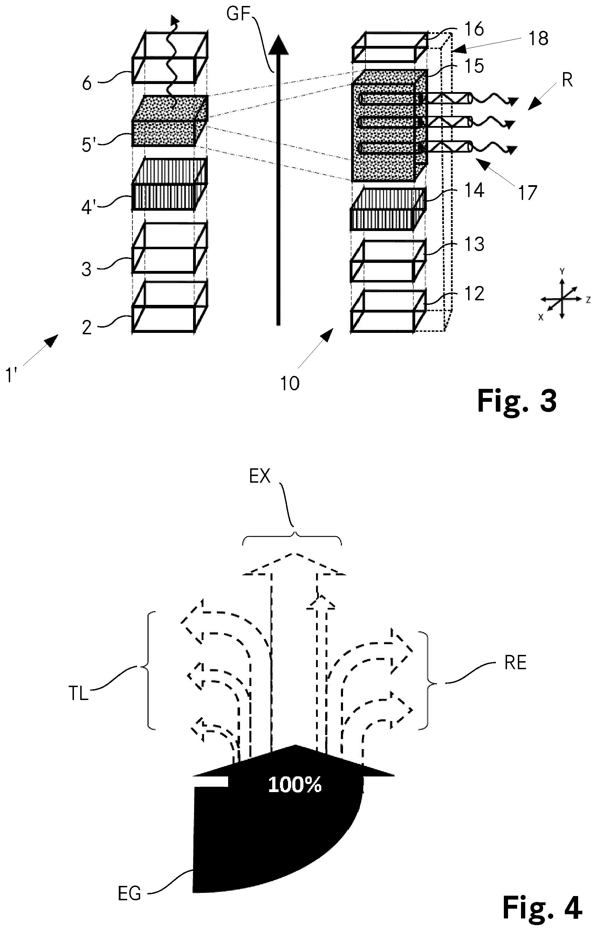

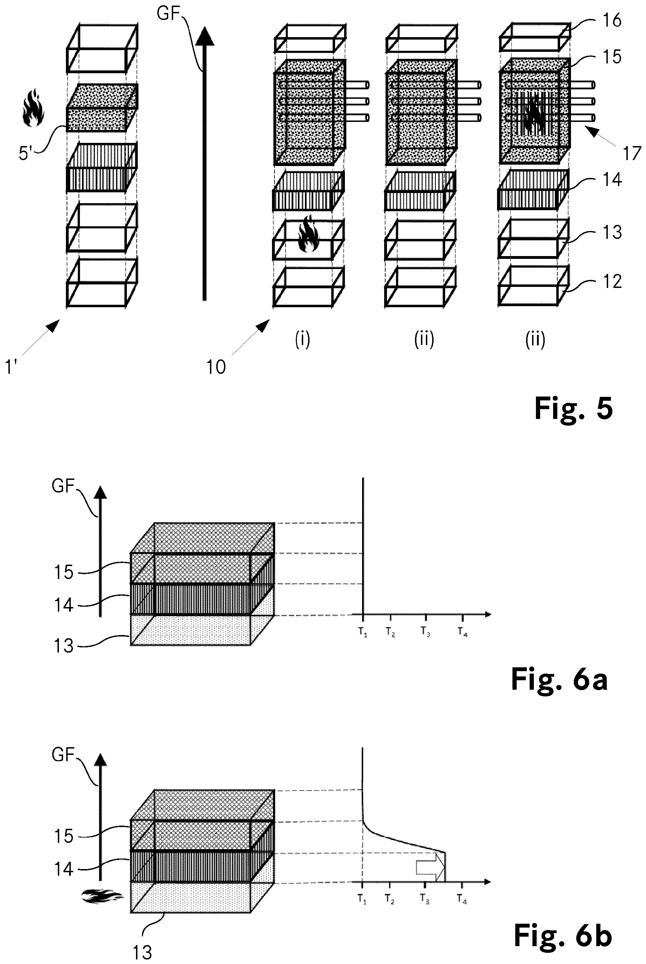

Fig. 3 shows a comparison between the prior art porous burner 1' as shown in Fig. 2 (left side of Fig. 3) and an inventive porous burner 10 (right side of Fig. 3) in exploded view. The inventive porous burner 10 comprises a gas supply device 12 for supplying the combustible gas and the gaseous oxidant, a mixing chamber 13, which is configured for delivering the combustible gas and gaseous oxidant through a flame barrier 14 into the combustion chamber 15 and which can be used for preheating the porous burner 10 in an initial start-up process (see Fig. 5 and 6a - 6f). At a side of the combustion chamber 15 opposite the flame barrier 14, an exhaust gas outlet 16 for discharging combusted gas from the combustion chamber 15 is arranged.

Additionally, the combustion chamber 15 comprises an array of straight light guiding fibres 17 arranged in the combustion chamber 15, whereby the light guiding fibres 17 extend across the combustion chamber 15 and penetrate through the surrounding thermal insulation 18 (indicated be dashed lines at the right side) in a direction perpendicular to the direction of gas flow GF. For better illustration, in Fig. 3 the array of light guiding fibres 17 is represented by only three fibres. However, in reality, the array of fibres typically comprises a larger number of fibres. The thermal insulation 18 surrounds the whole porous burner 10. However, in Fig. 3, for better presentation, only the right section of the thermal insulation is indicated by a dashed cuboid.

The porous structure of the combustion chamber 15 has a porosity of for example 70% and a pore density of for example 25 pores per inch (ppi).

The light guiding fibres comprised in the array 17 are designed for guiding visible (VIS) and near infrared radiation (NIR) and e.g. are made from Al₂O₃.The light guiding fibres have for example an outer diameter of 500 µm and are regularly spaced apart at for example 1'000 µm.

The array of fibres 17 allows for volumetric radiative cooling of the combustion chamber 15. In operation, this in particular results in stabilized flame front and prevents local hot spot formation by radiative cooling across the combustion volume perpendicular to direction of gas flow GF.

In general, with the inventive porous burners described in the present application, radiation is emitted from the porous burner in the plane (referred to as XZ-plane) perpendicular to the gas flow direction (referred to as Y-direction).

Fig. 4 shows the energy balance of the porous burner 10 of Fig. 3 with volumetric radiative cooling. The energy content EG of the combustible gas and the gaseous oxidant (= 100%) initially available is divided as follows: About 25% are lost in the form of thermal losses TL through the surfaces of the porous burner 10. Approximately 40% of energy exits the porous burner 10 through the exhaust gas outlet 16 in the form of hot exhaust gas and unburnt residual gas EX. The remaining energy is emitted from the porous burner 10 as radiation RE. Thereby, about 15% is emitted as far infrared radiation and approximately 20% in the form of VIS/NIR radiation from the fibre ends emanating from the cool surface of the hot porous burner 10.

Fig. 5 on the left hand side shows a typical prior art start-up procedure conducted with the porous burner 1. Thereby, the premixed gases are directly ignited inside the combustion chamber 5' or upstream or downstream, just outside, before the premixed gases enter or after they leave the combustion chamber. However, heating the porous material with a flame front entering the porous structure from the outside in is difficult to control and exposes the porous medium of the combustion chamber 5' to thermal stress during start-up. Doing so limits the use and operational lifetime of the porous burner, particularly in applications requiring frequent and rapid start-up and shutdown.

On the right-hand side of Fig. 5, an inventive method for rapidly reaching the operating state of the inventive porous burner 10 in a highly controlled manner is shown. For reasons of clarity, the thermal insulating 18 has been omitted.

According to the inventive method, the temperature of the porous burner 10 can be raised during cold start from ambient temperatures in the range of -20°C to 50°C to operating temperatures between 1'200°C and 1'600°C as follows: In a first step (i) a combustible gas (e.g. a hydrocarbon based fuel) and an oxidant (e.g. air) are supplied with the gas supply device 12 into the mixing chamber 13. After starting combustion with an ignition device, e.g. an electrically driven spark generator (not shown), the mixing chamber 13 is heated to a first temperature. Thereby, the combusted gas flows through the flame barrier 14 and the combustion chamber 15 in order to heat up these components with the combusted gas.

After the combustion chamber 15 has reached a predefined second temperature above the self-ignition temperature of the combustible gas and the oxidant, combustion of the combustible gas in the mixing chamber 13 is switched off in step (ii) by stopping the supply of combustible gas. Subsequently, the mixing chamber 13 cools down to a third temperature, which is lower than the self-ignition temperature of the combustible gas and the oxidant.

Once the mixing chamber 13 has reached the third temperature, the combustible gas and the oxidant are supplied through the mixing chamber 13 and the flame barrier 14 into the combustion chamber 15, whereby the combustible gas and the oxidant spontaneously ignite upon contact with the hot porous structure of the combustion chamber 15. Thereby, no external ignition is required.

Fig. 6a - 6f show the respective temperature profiles prevailing in the mixing chamber 13, the flame barrier 14 and the combustion chamber 15 (depicted without light guiding fibres) during the start-up procedure described above in connection with Fig. 5. For all Fig. 6a - 6f, the following designations apply: T₁ = ambient / gas inlet temperature; T₂ = temperature below self-ignition temperature of combustible gas and oxidant; T₃ = temperature above self-ignition temperature of combustible gas and oxidant; T₄ = target operating temperature of porous burner.

Fig. 6a shows the temperature profile before start or ignition, respectively. This represents a cold start situation. Thereby, the temperatures in the mixing chamber 13, the flame barrier 14 and the combustion chamber 15 all equal T₁ (vertical line at T₁).

Fig. 6b represents the temperature profile after ignition of the combustible gas and the oxidant in mixing chamber 13, i.e. during the start of the warm-up phase. Thereby, the temperature in the mixing chamber 13 and at the upstream side of the flame barrier 14 is between T₃ and T₄, whereas the temperature in the flame barrier 14 decreases to reach T₁ at the downstream side. The temperature in the combustion chamber 15 still is at T₁ in this situation.

The mixing chamber 13 is a thermally insulated open space separated from the porous burner's combustion chamber 15 by the flame barrier 14. This enables easy ignition of the premixed jet of gas and the ability to modulate power over a wide range. The mixing chamber 14 is a small, open volume enclosed in thermal insulation that may be heated unevenly with no adverse impact on material properties. After combustion in the mixing chamber, the hot gas is distributed evenly before entering and gradually heating up the flame barrier 14 and the subsequent combustion chamber 15. Since the hot exhaust gas is no longer reactive, the heating of the porous structure, eg. a ceramic porous matrix, of the combustion chamber 15 is very homogeneous along the gas flow path. No local hot spots can be formed. No thermally induced stress affects the porous structure or the ceramic material, respectively. Fast ramp to temperatures well above the self-ignition temperature (T₃) for the premixed gas, in the combustion chamber 15, is achieved in a simple and controlled manner. During this preheat phase, the temperature in the preheat zone can be raised to 1'200°C almost instantly. Initially a steep temperature gradient develops across the flame barrier 14. The air flow and power can be adjusted independently to ensure a fast and steady raise of the temperature in the combustion chamber 15. Once the temperature in the combustion chamber 15 reaches around 1'000°C, which is well above the self-ignition temperature of the premixed gases, the combustion in the mixing chamber 13 is stopped.

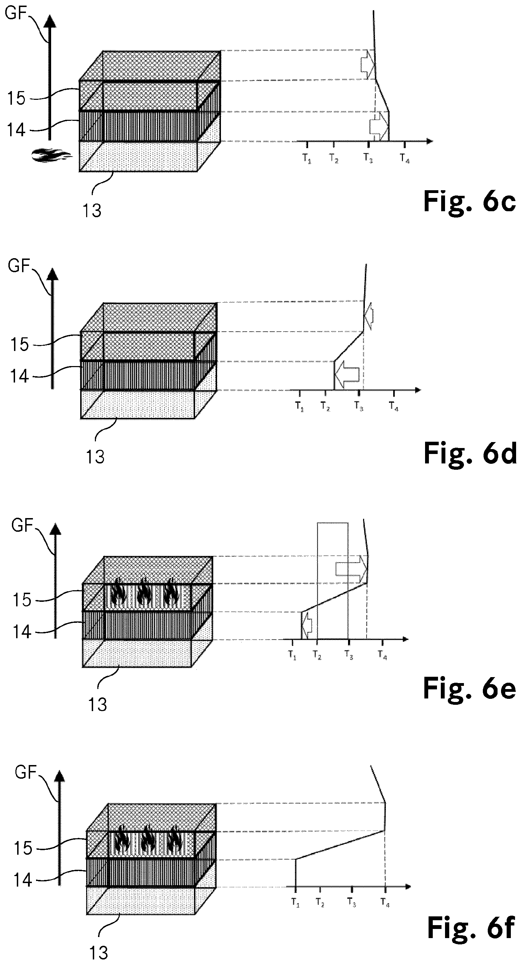

Fig. 6c represents the temperature profile at the end of the warm-up-phase. Thereby, the temperature in the mixing chamber 13 and at the upstream side of the flame barrier 14 still is between T₃ and T₄, whereas the temperature in the combustion chamber and at the downstream side of the flame barrier 14 has reached a temperature slightly above T₃. Within the flame barrier 14, the temperature gradually decreases from the upstream side to the downstream side.

Subsequently, the flow of combustible gas is switched off whilst the flow of air continues. The temperature in the mixing chamber 13 is rapidly lowered by the incoming air to well-below the self-ignition temperature of the premixed gas. Due to the thermal mass of the flame barrier 14, the air passing through the flame barrier heats up to high temperatures before entering the combustion chamber 15. Thus, the temperature profile in the flame barrier 14 inverts whilst staying well-above the self-ignition temperature throughout the combustion chamber 15.

Fig. 6d shows the temperature profile after the flow of combustible gas was switched off in order to stop combustion in the mixing chamber 13. Thereby, while the temperature in the combustion chamber 15 remains approximately at the temperature reached before, the temperature in the mixing chamber quickly decreases to a temperature between T₂ and T₃. In the flame barrier 14 a temperature gradient with decreasing temperature from the downstream side to the upstream side is formed.

As soon as the temperature in the mixing chamber 14 falls sufficiently-below the self-ignition temperature, air and combustible gas are again allowed to enter the mixing chamber 14, where they mix and distribute evenly before passing through the flame barrier 14. As soon as the premixed gas enters the hot combustion chamber 15, combustion starts spontaneously as the gas hits the hot porous structure. At low gas flow levels, the flame front stays confined to where the gas enters the porous structure. Combustion takes place and heat is generated at the very beginning (upstream side) of the porous structure, which ensures a swift and at the same time controlled further raising of temperature until reaching targeted operating temperature without ceramic materials and components suffering thermal stress and cracking resulting from inhomogeneous temperature distribution. The temperature thus raises homogeneously throughout the porous burner's combustion chamber and the combustible gas flow can be increased rapidly until reaching operating temperature, with no risk of local hotspots forming or dynamic, oscillating flame fronts running through the porous burner. Such phenomena are well known to affect prior art porous burners, causing thermal stress, material cracking and limiting lifetime of devices that do not have volumetric radiative cooling and are not ramped up in the way described here.

Fig. 6e shows the temperature profile after self-ignition in the pre-heated combustion chamber 15, i.e. the beginning of the ramp-up phase. This situation is achieved by supplying the combustible gas and the oxidant through the mixing chamber 13 and the flame barrier 14 into the combustion chamber 15. Due to the prevailing temperature profile shown in Fig. 6d, the combustible gas and the oxidant spontaneously ignite upon contact with the hot porous structure of the combustion chamber 15, which has a temperature above T₃, i.e. the self-ignition temperature. In parallel, the temperature of the mixing chamber 13 further decreases to a temperature between T₁ and T₂ due to the flow of the cold combustible gas and the oxidant. As a result, the gradient in the flame barrier 14 gets steeper.

Fig. 6f shows the temperature profile after reaching the final operating state. Thereby, the combustion chamber 15 is at T₄ whereas the mixing chamber 13 is back at T₁.

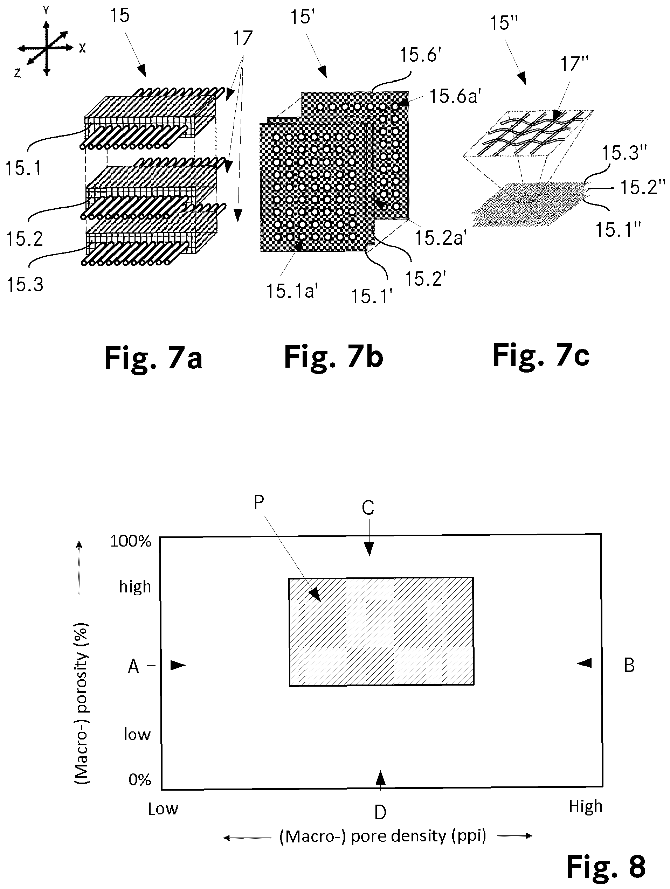

Fig. 7a shows a first possible design of the combustion chamber 15 in exploded view. Thereby, the porous structure of the combustion chamber 15 comprises a first sub-unit 15.1 consisting of a porous and space filling body with a plurality of openings, which extend through a macro-porous and space filling body and in which openings the light guiding fibres 17 are arranged in horizontal direction, such that the light guiding fibres form an integral part of the first sub-unit 15.1.

The first sub-unit 15.1 together with further sub-units 15.2, 15.3, which are identical in design with the first sub-unit 15.1, form a porous and space filling body or the porous structure of the combustion chamber 15, respectively.

In this case, for example, the cellular matrix structure consists of a 3D-printed ceramic material, e.g.. Multiple sub-units forming the porous structure can be designed for mass manufacturability by 3D printing and can be stacked to fill larger porous burner volumes.

Another possible design of a combustion chamber 15' is shown in Fig. 7b. In this embodiment, the porous structure of the combustion chamber 15' comprises a stack of spaced apart and perforated plates 15.1', 15.2', ...15.6'. The perforated plates 15.1', 15.2', ...15.6' are configured such that the perforations 15.1a', 15.2a' ... 15.6a' of the individual perforated plates 15.1', 15.2', ... 15.6' are arranged in an overlapping manner and the fibres of the array of light guiding fibres (not shown in Fig. 7b) can run through the perforations 15.1a', 15.2a' ... 15.6a' of the perforated plates 15.1', 15.2', ... 15.6'.

In this embodiment, the porous structure of the combustion chamber 15 is formed by the light guiding fibres and the perforated plates 15.1', 15.2', ... 15.6'. The stack allows for keeping the array of light guiding fibres in a defined and fixed position within the combustion chamber 15. The perforated plates 15.1', 15.2', ...15.6' can be made for example of a ceramic matrix composite material, e.g. a polycrystalline ceramic wool (PCW). Optionally, the perforated plates and/or the light guiding fibres are coated with a luminescence generating material. The luminescence generating material for example provides an emitting radiation predominantly in the near infrared range, in particular 900-1'100 nm. For example, it comprises one or more rare earth materials of a group comprising elements with atomic numbers 21, 39 or 57-71, in particular optically active element category lanthanide with atomic numbers: 57-71 and transition metals with atomic numbers 21, 39 or 57, in particular at least one element of the group comprising Ytterbium, Neodymium, Erbium and Yttrium.

Fig. 7c shows a third possible design of a combustion chamber 15". Thereby, the porous structure is formed by a stack of two-dimensional layers 15.1", 15.2", 15.3" of light guiding fibres 17" in an interwoven arrangement. In this case, thin and flexible light guiding fibres are used.

Fig. 8 shows an overview of suitable porosities and pore densities of structures made of ceramic materials for porous burners, such as e.g. the porous structures shown in Fig. 7a and Fig. 7b. In region A, at very low pore densities, the pore sizes far exceed the gas diffusion length whereas in region B, at very high pore densities, the pore sizes are very small, resulting in a high resistance to gas flow. In region D, at a very low porosity, the stability of a solid material typically is high, whereas in region C, at a very high porosity, the material gets mechanically unstable. However, if porosity and pore density are properly chosen in the porous combustion regime P, the porous material is mechanically and thermally stable up to 1'700°C under typical conditions prevailing in porous burners.

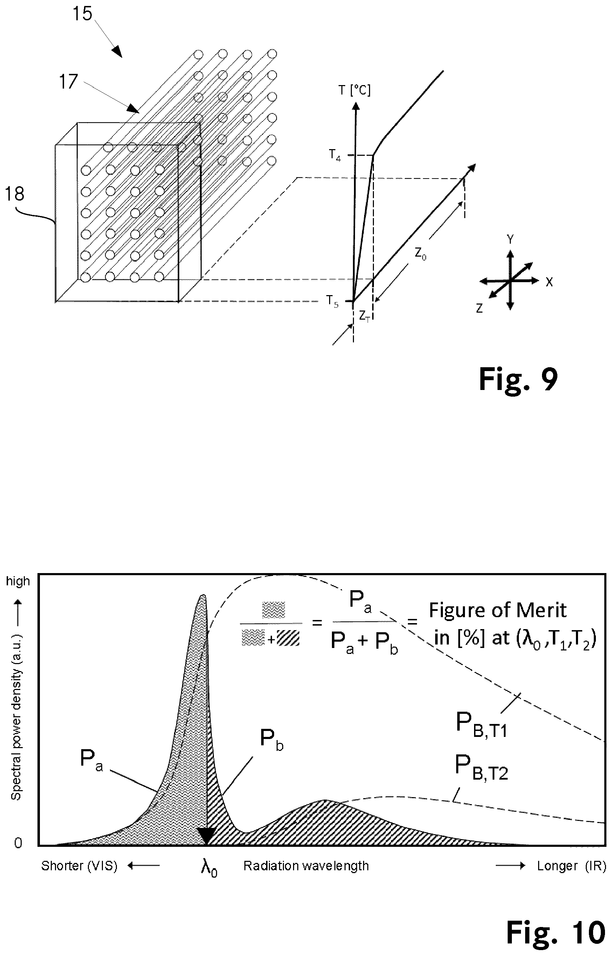

Fig. 9 shows the temperature gradient across the porous combustion chamber 15 and the thermal insulation 18 of the porous burner 10 in the direction of radiative energy transport, i.e. along the light guiding fibres 17. The thermal insulation 18 consist of a high-temperature resistant thermally insulating material, e.g. made of a ceramic matrix composite material, e.g. a polycrystalline ceramic wool (PCW). The thermal insulation 18 comprises an array of densely spaced holes for guiding through the array of light-guiding fibres 17, such that the latter can extend across the combustion chamber 15 and penetrate through the surrounding thermal insulation 18.

In Fig. 9, the following definitions apply: Z₀ = length of combustion chamber 15 in direction along the light guiding fibres 17; Z_{T} = thickness of thermal insulation 18; T₄ = operating temperature of porous burner (inside the combustion chamber); T₅ = temperature on the outer surface of thermal insulation 18. As evident from Fig. 9, there is a gradient along the thickness of the thermal insulation 18.

Fig. 10 shows the figure of merit (%) of an inventive porous burner, i.e. the ratio of radiative energy emitted at short wavelengths, below a certain cut-off wavelength λ₀, to the total radiative energy emitted.
- Pₐ = Radiation below cutoff wavelength λ₀, from hot cavity, captured in VIS/NIR transparent fibre, guided towards cold fibre end;
- P_{b} = Radiation above cutoff wavelength, mainly from IR opaque cold fibre section, at cold fibre end;
- P_{B, T1} = Black body radiation at combustion temperature T1;
- P_{B, T2} = Black body radiation at surface temperature T2.

Thus, the Figure of Merit can be improved by: (i) raising the combustion temperature T1, (ii) structuring and doping the light guiding fibres to achieve high VIS / NIR transparency and high IR absorption, (iii) applying an IR reflective coating to all surfaces to reduce black body emission at surface temperature T2, and/or (iv) improving thermal insulation or reducing thermal losses.

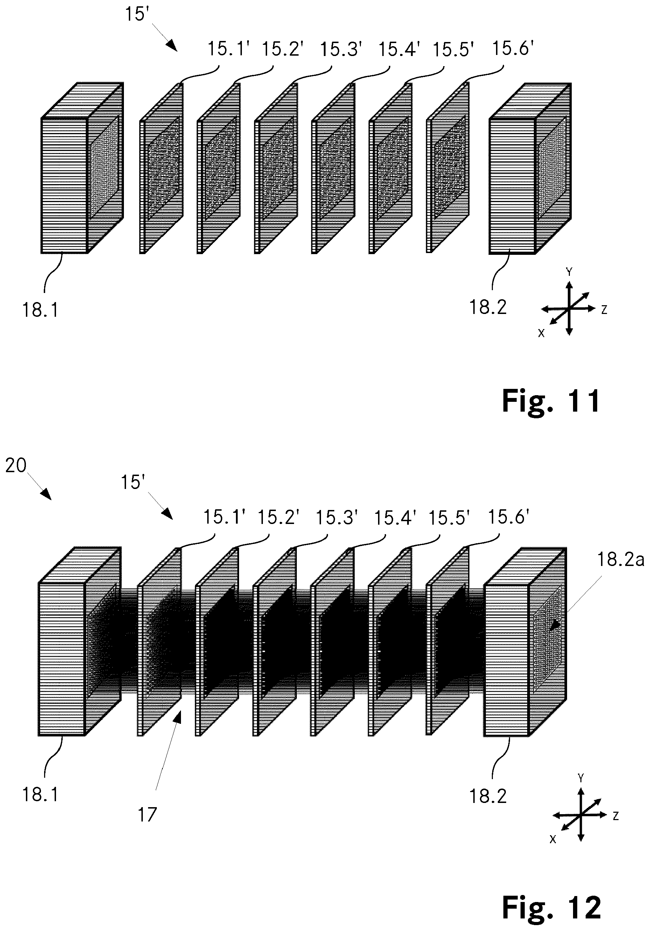

Fig. 11 shows a detailed view of the design of the combustion chamber 15' with a number of spaced apart perforated plates, e.g. 15.1', ..., 15.6', shown in Fig. 7b with additional thermal insulation elements 18.1, 18.2 facing the left adjacent perforated plate 15.1' and the right adjacent perforated plate 15.6'. The thermal insulation elements 18.1, 18.2 both comprise an array of densely spaced holes with the same arrangement as the perforations of the plates 15.1', ..., 15.6'. In Fig. 11, no fibres are present in the perforations and the holes and further insulation elements have been omitted for better presentation.

Fig. 12 shows the arrangement of Fig. 11 with an array of light guiding fibres 17 arranged in the perforations of the plates 15.1', ..., 15.6' and the holes of the thermal insulation elements 18.1, 18.2. Thereby, the light-guiding fibres extend across the complete combustion chamber 15' and penetrate through the thermal insulation elements 18.1, 18.2. As shown on the right side, a part 18.2a of the outer surface of the insulation element 18.2 partly consists of the fibre ends of the array of light guiding fibres 17. The same is true for the opposite side or the insulating element 18.1. With this setup, electromagnetic radiation in the visible and/or near infrared spectrum can be decoupled from the combustion chamber 15' in a highly efficient manner while maintaining the combustion chamber 15 under thermally isolated conditions.

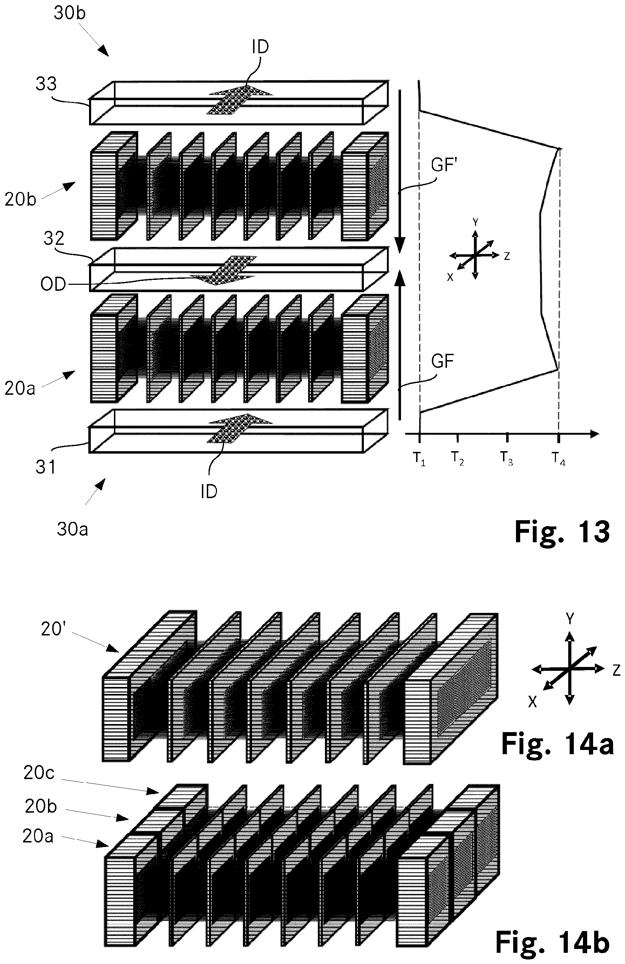

Fig. 13 shows a setup with two porous burners 30a, 30b, arranged with opposing gas flow direction. The combustion chambers 20a, 20b of the porous burners 30a, 30b are essentially identical in design with the combustion chamber 15' shown in Fig. 12.

Below the first combustion chamber 20a, there is a lower plane 31, comprising a first gas supply device, a mixing chamber and a flame barrier (similar in design with the respective components shown in Fig. 3). Likewise, above the second chamber 20b, there is an upper plane 33, comprising a second gas supply device, a mixing chamber and a flame barrier (similar in design with the respective components shown in Fig. 3).

In between the two combustion chamber 20a, 20b, there is a middle plane 32 comprising the gas outlet of the first porous burner 30a as well as the gas outlet of the second porous burner 30b. Thus, the first and second porous burners 30a, 30b share a common exhaust gas outlet.

In this setup the gas flow direction GF of the first porous burner 30A is anti-parallel to the gas flow direction GF' of the second porous burner 30B, and the hot sides of the two porous burners are facing each other while opposing ends both are cold, as indicated in the temperature profile on the right hand side of Fig. 13.

Noteworthy, the inlet directions ID of the combustible gas and the oxidant in the planes 31, 33 can be chosen anti-parallel to the outlet direction OD of the exhaust gas in plane 32.

As mentioned above, radiation is emitted from the porous burner in the plane (referred to as XZ-plane) perpendicular to the gas flow direction (referred to as Y-direction). In case of an array of closely spaced light-guiding fibres, with all fibres oriented in one direction (referred to as Z-direction), the dimension of the combustion zone of such porous burner can be designed such as to have:
- Any dimension in X-direction;
- A dimension in Y-direction (gas flow) that may be as short or long as desired, depending on premixed gas pressure and composition, limited only by requirements for maximum tolerable pressure drop, exhaust gas temperature and composition;
- A dimension in Z-direction (radiation) that is limited only by the optical properties of the light guiding fibres at the operating temperature of the porous burner;

As an example of the scalability of the inventive setup, Fig. 14a shows a combustion chamber 20' which basically is identical in design as the combustion chamber 15' shown in Fig. 12. However, a depth of the combustion chamber 20' in X-direction has been increased. Of, course the other components omitted in Fig. 14a (gas supply device, mixing chamber, flame barrier, exhaust gas outlet and thermal insulation) are to be scaled and adapted accordingly.

Fig. 14b show another possibility how to scale the porous burners according to the present invention. Thereby, three combustion chamber 20a, 20b, 20c, which are identical in design as the combustion chamber 15' of Fig. 12 are stacked in X-direction. Also in this case, the other components omitted in Fig. 14b (gas supply device, mixing chamber, flame barrier, exhaust gas outlet and thermal insulation) are to be scaled and adapted accordingly.

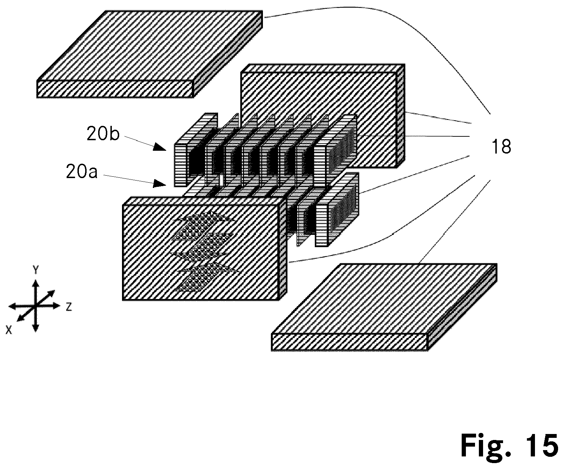

Fig. 15 schematically shows how a setup with two porous burners as shown in Fig. 13 is thermally insulated. Thereby, four further insulating elements are attached to the porous burners in order to surround the setup including the gas supply devices, the mixing chambers, the flame barriers and the exhaust gas outlets. Of course, there are suitable passages in the insulating elements for introducing the combustible gas/oxidant and for leading away exhaust gas.

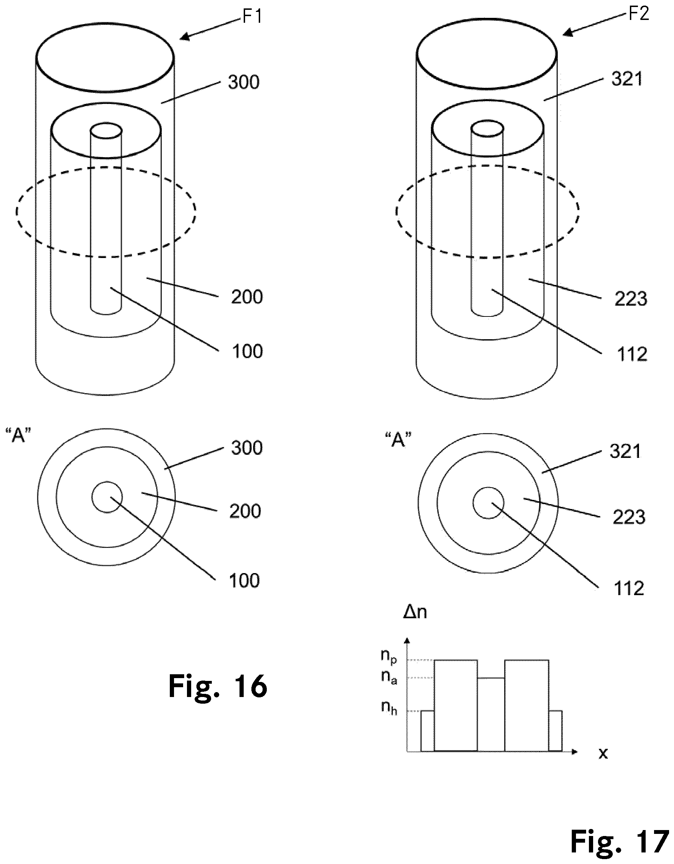

Fig. 16 shows a schematic view of an optical fibre F1 which can be used in the array of light guiding fibres 17. The optical fibre F1 may comprise a zone referred to as core 100, in this example a single core, a zone referred to as cladding 200 and a peripheral zone in form of an outer hull 300. The cladding 200 surrounds the core 100 and the outer hull 300 surrounds the core 100 and the cladding 200. The lower part of figure 16, as indicated by reference "A" shows a cross-section along the dotted line as shown in the upper part of figure 16. The core 100 and the cladding 200 and the outer hull 300 are arranged 20 concentrically. Configurations other than concentrically arranged cylinders and tubes are also possible.

Fig. 17 shows an optical fibre F2 according to Fig. 16 with a luminescence generating zone in form of a core 112 and a wave guiding zone in form of a high refractive index cladding 223 and a hull 321. The upper part of Fig. 17 shows a schematic perspective view of the optical fibre, the middle part the corresponding cross-section "A" and the lower part a corresponding refractive index profile. The refractive index profile shows the relative refractive index Δn in dependency of the direction x, which extends across the optical fibre.

The core 112 comprises a first material with a refractive index nₐ, also referred to as active material, the cladding 223 comprises a second material with a refractive index nₚ, also referred to as passive material, and the outer hull 321 that comprises a third material with a refractive index nₕ. The following expression is valid:
nₕ < nₐ < nₚ
with index "h" denoting the refractive index of the hull, index "a" the active material and index "p" the passive material. Thus, the refractive index nₕ of the hull 321 is lower than the refractive index nₐ of the core 112, which 15 in turn is lower than the refractive index nₚ of the cladding 223. This situation is illustrated by way of example in the refractive index profile as show in Fig. 17.

This configuration provides for an internal reflection, preferably a total internal reflection, of radiation emitted from the core 112 into the cladding 223 so as to thereby confine multiple modes of said emitted radiation within the cladding 223.

Further suitable fibre configurations are shown in Fig. 3, 4, 5, 6 and 7 and described on page 23, line 26 - page 26, I. 12 of the international patent application PCT/EP2021/056230 of the same applicant. Suitable materials and methods for producing the fibres are described in the same international patent application on page 26, line 14 - page 28. These figures and paragraphs of PCT/EP2021/056230 are hereby incorporated by reference.

While these kind of special fibres have special advantages, it is possible as well to use ordinary light guiding fibres.

In summary, it is to be noted that in comparison with known porous burners, the inventive porous burners with volumetric radiative cooling can in particular be implemented with the following special features:
- thermoluminescence enhanced radiation generation
- an array of light-guiding fibres for volumetric radiation extraction
- a fully encapsulated design for low-loss thermal insulation
- rapid preheating and self-igniting porous combustion

This allows for achieving continuous stable operation, high operating temperatures, exceptional figures of merit, high power densities, fast ramp-up as well as longevity.

## Claims

1. Porous burner (10) comprising:
a) a combustion chamber (15) having porous structure, for combustion of a combustible gas and a gaseous oxidant, flowing through the combustion chamber (15) along a direction of gas flow (GF);
b) a porous or non-porous flame barrier (14) being located upstream the combustion chamber (15);
c) a mixing chamber (13) being arranged upstream the flame barrier (14), which is configured for delivering the combustible gas and gaseous oxidant through the flame barrier (14) into the combustion chamber (15) and which can be used for preheating the porous burner (10) in an initial start-up process;
d) a thermal insulation (18) surrounding at least the combustion chamber (15);
e) a gas supply device (12) for supplying the combustible gas and/or the gaseous oxidant to the mixing chamber (13);
f) an exhaust gas outlet (16) for discharging combusted gas form the combustion chamber (15), especially at a side of the combustion chamber (15) opposite the flame barrier (14);
g) an array of light guiding fibres (17) arranged in the combustion chamber (15), whereby the light guiding fibres extend across the combustion chamber (15) and penetrate through the surrounding thermal insulation (18) in a direction different to the direction of gas flow (GF), especially perpendicular to the direction of gas flow (GF).

2. Porous burner according to claim 1, whereby the porous structure of the combustion chamber (15) has a porosity of 20 - 90%, especially 50 - 90% and/or whereby the porous structure of the combustion chamber (15) has a pore density of 10 - 35 pores per inch (ppi).

3. Porous burner according to any of preceding claims, whereby the light guiding fibres (17) have an outer diameter of 10 - 1000 µm and/or the light guiding fibres (17) in the array are spaced apart, especially regularly spaced apart, at 15 - 1'500 µm.

4. Porous burner according to any of preceding claims, whereby the light guiding fibres (17) are essentially straight.

5. Porous burner according to any of preceding claims, whereby, with respect to their longitudinal axes, all of the light guiding fibres (17) are arranged in parallel, especially in a direction perpendicular to the direction of gas flow (GF).

6. Porous burner according to any of preceding claims, whereby the porous structure of the combustion chamber (15) comprises a plurality of openings, especially cylindrical and/or prismatic openings, which extend through a porous and space filling body (15.1, 15.2, 15.3) of the combustion chamber (15) and in which openings of the body (15.1, 15.2, 15.3) the light guiding fibres (17) are arranged, especially such that the light guiding fibres (17) form an integral part of the porous structure of the combustion chamber (15).

7. Porous burner according to any of claims 1 - 6, whereby the porous structure of the combustion chamber (15') comprises a stack of spaced apart and perforated plates (15.1', 15.2', ..., 15.6'), which are configured such that the perforations (15.1a', 15.2a', ... 15.6a') of the individual perforated plates (15.1', 15.2', ..., 15.6') are arranged in an overlapping manner and the fibres of the array of light guiding fibres (17) run through the perforations (15.1a', 15.2a', ... 15.6a') of the perforated plates (15.1', 15.2', ..., 15.6').

8. Porous burner according to any of claims 1 - 6, whereby the porous structure is formed by the light guiding fibres in an interwoven arrangement, especially by a stack of at least two two-dimensional layers of light guiding fibres, whereby in each of the layers light guiding fibres are present in an interwoven arrangement.

9. Porous burner according to any of preceding claims, whereby the light guiding fibres (17) are designed for guiding visible (VIS) and/or near infrared radiation (NIR) and, preferably, the light guiding fibres are made of materials selected from Al₂O₃, SiO₂ or YAG (yttrium aluminium garnet).

10. Porous burner according to any of the preceding claims, whereby the light guiding fibres (F2) comprise two zones:
- at least one luminescence generating zone (112) of a first material comprising a luminescence generating material for providing an emitted radiation predominantly at visible or near-infrared wavelength, and
- at least one wave guiding zone (223) of a second material,
wherein the at least one wave guiding zone (112) is configured to concentrate the emitted radiation predominantly within the at least one wave guiding zone (223).

11. Porous burner according to any of preceding claims, whereby the porous structure of the combustion chamber (15) comprises a luminescence generating material, whereby, preferably, the luminescence generating material is homogeneously distributed on a microporous surface of the macro-porous structure and/or the luminescence generating material is located on an inner surface of the plurality of openings for receiving the light guiding fibres and/or the outer surface of the lightguiding fibres.

12. Setup, comprising at least a first porous burner (30a) according to any of claims 1 - 11 and a second porous burner (30b) according to any of claims 1 - 11, whereby the at least two porous burners (30a, 30b) are arranged such that the exhaust gas outlet of the first porous burner (30a) is facing the exhaust gas outlet of the second porous burner (30b).

13. Method for operating a porous burner according to any of claims 1 - 11 or a setup according to claim 12, whereby in operating state, a combustible gas and an oxidant are supplied along a direction of gas flow (GF) through the mixing chamber (13) and the flame barrier (14) for combustion in the combustion chamber (15).

14. Method according to claim 13, whereby for reaching the operating state, further comprising the following steps:
(i) Supplying the combustible gas and the oxidant for combustion into the mixing chamber (13), whereby the mixing chamber (13) is heated to a first temperature; and let the combusted gas flow through the flame barrier (14) and the combustion chamber (15) in order to heat up these components with the combusted gas;
(ii) After the combustion chamber (15) has reached a predefined second temperature, especially a temperature above the self-ignition temperature of the combustible gas and the oxidant, stopping the combustion of the combustible gas in the mixing chamber (13), especially by stopping the supply of combustible gas; and let the mixing chamber (13) cool down to a third temperature, which is lower than the second temperature, especially below the self-ignition temperature of the combustible gas and the oxidant;
(iii) Supplying the combustible gas and the oxidant through the mixing chamber (13) and the flame barrier (14) into the combustion chamber (15), such that the combustible gas and the oxidant spontaneously ignite upon contact with the porous combustion chamber (15).

15. Use of a porous burner or a setup according to any of claims 1 - 12 for generating electromagnetic radiation in the visible and/or near infrared spectrum.
